# EUROPÄISCHE PATENTSCHRIFT

(11) **EP 2 987 710 B1**
(45) Veröffentlichungstag und Bekanntmachung des Hinweises auf die Patenterteilung: **04.01.2017**
(21) Anmeldenummer: 15179132.4
(22) Anmeldetag: 30.07.2015
(51) Int. Cl.: B62J 11/00

(54) **UNIVERSALHALTER**
UNIVERSAL SUPPORT
FIXATION UNIVERSELLE

(30) Priorität: 08.08.2014 DE 202014103690 U
(43) Veröffentlichungstag der Anmeldung: 24.02.2016
(73) Patentinhaber: Trelock GmbH, 48140 Münster (DE)
(72) Erfinder: Steinkamp, Winfried, 48249 Dülmen (DE)
(74) Vertreter: Hentrich Patentanwälte PartG mbB

(56) Entgegenhaltungen:
- DE-A1-102013 102 009
- DE-U1-202005 013 390
- DE-U1-202007 011 170
- DE-U1-202010 003 320
- US-A- 3 748 876
- US-A- 5 018 374
- US-A- 5 392 971
- US-A1- 2011 219 829

## Beschreibung

Die Erfindung betrifft einen Universalhalter für ein Faltschloss, mit einem, mindestens ein Mittel zur Befestigung an einer Zweiradstrebe aufweisenden, Basissteg und mit einem Spanngurt.

Derartige Halter sind aus dem Gebrauchsmuster DE 20 2007 011 170 bekannt, in der ein Halter für ein Zweiradzubehörteil beschrieben wird, welches an einem Basissteg an einer Zweiradstrebe befestigt wird. Der Halter weist zwei Seitenwangen auf und einen von der Rückseite des Basisstegs über den Halter nach vorne verlaufenden Spanngurt, der in einen Raststift eingehakt werden kann, um das Zubehörteil vor dem Herausfallen zu sichern.

Der im Gebrauchsmuster DE 20 2007 011 170 beschriebene Halter ist nur für Zubehörteile, in diesem Fall für Faltschlösser, geeignet, deren Länge nicht die Länge der Seitenwangen und des Spanngurts überschreitet. Weist das Zubehörteil wiederum eine deutlich geringere Länge als der Halter aus dem Gebrauchsmuster DE 20 2007 011 170 auf, so wird die Entnahme des Zubehörteils erschwert. Analog können Faltschlösser mit einer Breite, die den Abstand zwischen den beiden Innenseiten der Seitenwangen überschreitet, nicht mittels dieses Halters transportiert werden. Aufgrund des Verlaufs des Spanngurts von hinten nach vorne, über den Halter, wie das auch bei anderen Haltern im Stand der Technik realisiert ist, ermöglicht der Halter darüber hinaus die Entnahme des Faltschlosses nur von oben.

Der Erfindung liegt daher die Aufgabe zugrunde, einen flexiblen, für verschiedene Faltschlösser mit unterschiedlichen Maßen geeigneten Universalhalter, zu konstruieren.

Diese Aufgabe wird nach der Erfindung bei einem Universalhalter der eingangs genannten Art dadurch gelöst, dass der Basissteg in Form von einer unteren Schiene und einer oberen Schiene ausgebildet ist, die gegeneinander verschiebbar und mittels einer Fixiereinheit arretierbar sind, dass der Spanngurt in Umfangrichtung zum Basissteg verläuft und mit der oberen Schiene an zwei Seiten verbindbar ist, und dass am unteren Ende der unteren Schiene eine Lagerschale angeordnet ist.

Durch die Erfindung wird es möglich, aufgrund der Längenverstellung des Basisstegs durch das Verschieben der beiden Schienen gegeneinander, Faltschlösser mit unterschiedlicher Länge, oder auch unterschiedlicher Breite, unterschiedlichen Materials und auch unterschiedlicher Schließmechanismen zu transportieren, d.h. es ist möglich, Faltschlösser mit unterschiedlichen Sicherheitsstufen zu fixieren. Darüber hinaus erhöht diese Ausführungsform des Universalhalters die Flexibilität für den Verbraucher, da die Entnahme des Faltschlosses nicht mehr nur nach oben hin beschränkt ist, sondern das Faltschloss auch nach vorne hin aus dem Universalhalter entnommen werden kann. Dies erweist sich besonders bei Fahrrädern, deren Rahmenkonfiguration nur einen sehr geringen Montageraum für Schlösser zulassen, als vorteilhaft. Das Faltschloss kann durch eine leichte Kippbewegung nach vorne aus dem Halter entnommen werden. Dies ist eine deutliche Vereinfachung der Entnahme des Faltschlosses. Beispielsweise muss die Entnahme eines Faltschlosses, das sich im Halter nach dem Gebrauchsmuster DE 20 2007 011 170 befindet, über die gesamte Länge der Seitenwangen hinweg nach oben hin erfolgen. Die beiden gegeneinander verschiebbaren Schienen können dabei nebeneinander angeordnet sein, aufgrund der stark vereinfachten Arretierbarkeit der beiden Schienen ist es allerdings von Vorteil, sie hintereinander anzuordnen. Die Lagerschale und der Spanngurt dienen der Fixierung des Faltschlosses im Universalhalter nach unten, nach hinten und nach vorne. Dabei ermöglicht die Tatsache, dass das eine Sicherheitsmittel, der Spanngurt, an der oberen Schiene und das andere Sicherheitsmittel, die Lagerschale, an der unteren Schiene angeordnet sind, dass das Faltschloss auch im Falle der Längenverstellung sicher im Halter fixiert ist. Im Rahmen der Erfindung ist es weiterhin bevorzugt, dass das Mittel zur Befestigung an der Zweiradstrebe zwei voneinander beabstandete Öffnungen an der unteren Schiene, zwei entlang derselben Längsachse verlaufende Langlöcher an der oberen Schiene und zwei Gewindeschrauben umfasst. Dies ermöglicht die Befestigung des Universalhalters an der Zweiradstrebe auch bei verschiedenen Universalhalterlängen. Darüber hinaus ist die Verstellung des Universalhalters auch möglich, ohne den Universalhalter von der Zweiradstrebe lösen zu müssen. Die Tatsache, dass ein Halter für viele verschiedene Faltschlösser geeignet ist, ermöglicht den Produzenten von Faltschlössern Synergieeffekte bei der Produktion zu nutzen, da nicht mehr jedem Schlosstypen ein anderer Halter zugeordnet werden muss bzw. nicht mehr für jeden Schlosstypen ein separater Halter produziert werden muss. Produktion, Einkauf und Logistik werden wesentlich vereinfacht und kostengünstiger, u.a. auch durch die Anfertigung von höheren Stückzahlen eines einzigen Halters.

Im Rahmen der Erfindung ist es weiterhin vorgesehen, dass die Lagerschale ein mit der unteren Schiene zusammenwirkendes Rückenteil, zwei Seitenteile und eine Stirnseite aufweist, dass die Höhe des Rückenteils geringer ist als die Länge der unteren Schiene und dass die Höhe der Stirnseite geringer ist als die Höhe des Rückenteils. Eine Lagerschale mit einer verringerten Höhe ermöglicht eine leichte Entnahme des Faltschlosses bei trotzdem hohem Fixierungsgrad und bei gleichzeitig verringertem Materialverbrauch. Insbesondere hat es sich als günstig erwiesen, wenn das Rückenteil breiter ausgebildet ist als die Breite der unteren Schiene. Dadurch können Faltschlösser verschiedener Breite aufgenommen werden bei ebenfalls reduziertem Materialverbrauch.

Im Rahmen der Erfindung ist es weiterhin bevorzugt, dass die Höhe der Stirnseite angepasst ist an den Abstand der Gelenkbolzen des in die Lagerschale einzusetzenden Faltschlosses von dessen unterem Ende. Die optimale Anpassung der Höhe der Stirnseite an den Abstand der Gelenkbolzen verhindert, dass das Faltschloss, und speziell die inneren Glieder des Faltschlosses, nach vorne aus dem Universalhalter herauskippen können bei gleichzeitig geringem Materialaufwand.

Weiterhin hat es sich als sinnvoll erwiesen, dass die Höhe der Seitenteile sich vom Rückenteil zur Stirnseite schräg verlaufend verringert. Die schräg verlaufenden Seitenteile ermöglichen dabei einen seitlichen Rausfallschutz bei geringem Materialverbrauch. Alternativ können die Seitenteile auch abgerundet ausgebildet sein.

Insbesondere ist es vorteilhaft, wenn dem Inneren der Lagerschale an den beiden Seitenteilen je eine Antirutsch-Einheit zugeordnet ist. Die Antirutsch-Einheit kann dabei in Form von einer gummierten Oberfläche oder in Form von einer Oberfläche, die mit gummierten Noppen überzogen ist, ausgebildet sein, so dass die Noppen bzw. die gummierte Oberfläche, mit dem Faltschloss und dem Spanngurt einen Reibschluss bilden. Die Antirutsch-Einheit führt zu einer zusätzlichen Fixierung des Faltschlosses auch bei verstärkter Vibration und dient gleichzeitig je nach Materialwahl des Universalhalters dem Schutz des Faltschlosses vor Beschädigung durch den Universalhalter beispielsweise durch das Fahren über unebene Bodenbeläge. Alternativ oder ergänzend kann die Lagerschale im Inneren eine konusförmige Aufnahme aufweisen, deren Flächen jeweils über ein Rastelement oder eine Feder mit einer der Seitenwände verbunden sind. Dadurch wird eine einfache Aufnahme bzw. ein vereinfachtes Einsetzen verschiedener Faltschlösser unterschiedlicher Breite in den Universalhalter erreicht sowie eine zusätzliche Fixierung des Faltschlosses im Universalhalter. Ebenso ist es möglich, dass die Flächen der konusförmigen Aufnahme über Rastelemente oder über eine Feder jeweils an der Stirnseite und an der Rückseite des Inneren der Lagerschale angebracht sind. Dies erlaubt eine vereinfachte Aufnahme und eine zusätzliche Befestigung von verschiedenen Faltschlössern, die unterschiedliche Tiefen aufweisen. Darüber hinaus ist natürlich auch eine Kombination dieser beiden Ansätze vorstellbar, in dem das Innere der Lagerschale eine trichterförmige Aufnahme aufweist, deren Flächen über Rastelemente oder eine Feder jeweils mit den beiden Seitenflächen, dem Rückenteil und der Stirnseite verbunden sind.

Im Rahmen der Erfindung ist weiterhin vorgesehen, dass die obere Schiene T-förmig ausgebildet ist, dass der Spanngurt einen mit zwei Raststiften verbundenen Ausleger aufweist, und dass die Raststifte an den freien Enden des oberen T-Schenkels der oberen Schiene angeordnet sind. Die T-förmige Ausbildung der oberen Schiene bewirkt, dass auch Faltschlösser im Universalhalter aufgenommen werden können, die breiter als die Breite der Schiene ausgebildet sind. Gleichzeitig wird der Materialverbrauch reduziert, wodurch es zu einer Verringerung des Gewichts des Universalhalters kommt. Der Spanngurt kann dabei von einer Seite oder auch von beiden Seiten geöffnet werden, je nachdem ob der Spanngurt einen Ausleger oder zwei Ausleger aufweist. Dabei ist es präferiert, den Spanngurt am oberen Ende des T-Stücks der oberen Schiene anzuordnen, allerdings kann der Spanngurt auch in der Mitte angeordnet sein, wobei die Lage des T-Schenkels an die gewünschte Lage des Spanngurts angepasst ist. Der Spanngurt ermöglicht im Zusammenspiel mit der Stirnseite der Lagerschale eine Sicherung des Faltschlosses nach vorne und erlaubt gleichzeitig die Entnahme des Faltschlosses nicht nur nach oben, sondern auch nach vorne.

Ganz besonders bevorzugt ist es weiterhin, wenn die obere Schiene ein Festhalteelement aufweist. Dieses Festhalteelement kann bei einer besonders einfachen Ausführungsform in Form von gummierten Noppen ausgebildet sein, die sich auf der Innenseite des oberen T-Schenkels der oberen Schiene befinden. Ein alternativer und ganz besonders bevorzugter Ansatz beinhaltet, dass das Festhalteelement in Form eines Niederhalters ausgebildet ist, der sich am oberen Ende der oberen Schiene befindet. Das Festhalteelement bewirkt eine zusätzliche Fixierung des Zubehörteils bei verstärkter Vibration, die z.B. beim Fahren über unebene Bodenbeläge entsteht. Der Niederhalter erzeugt dabei eine Kraft, die das Faltschloss nach unten in Richtung Lagerschale drückt. Der Niederhalter ist dabei einstellbar ausgebildet, z.B. über einen Rastsitz.

Es hat sich als sinnvoll erwiesen, dass die Fixiereinheit mindestens eine Bohrung durch mindestens die obere Schiene und ein Fixiermittel umfasst. Die Fixiereinheit dient dabei der Arretierung der unteren Schiene mit der oberen Schiene bei verschiedenen Längen. In einer bevorzugten Ausführungsform weist die obere Schiene zwei parallel angeordnete Bohrungen auf, während die untere Schiene über die Länge der unteren Schiene verteilt mehrere dazu passend ausgebildete Bohrungspaare aufweist. Die Länge des Basisstegs kann durch das Verschieben der beiden Schienen gegeneinander variiert werden und die Lage der beiden Schienen, bzw. die eingestellte Länge, mittels zweier Fixiermittel in Form von zwei Schrauben oder Niete fixiert werden. Ein alternativer Ansatz beinhaltet, dass die untere Schiene anstatt der über die Länge verteilten Bohrungspaare jeweils über die Länge der unteren Schiene an verschiedenen Positionen angeordnete Rastkugelpaare aufweist, die eine schnelle Fixierung und Lösung der beiden Schienen ermöglicht.

Weiterhin hat es sich als vorteilhaft erwiesen, wenn der Spanngurt gitterförmig ausgebildet ist. Besteht der Spanngurt aus einem flexiblen Material, so können Faltschlösser unterschiedlicher Breite optimal fixiert werden.

Im Rahmen der Erfindung hat es sich auch als vorteilhaft erwiesen, dass die obere Schiene und die untere Schiene unterschiedlich breit vorgesehen sind, dass die obere Schiene zwei Abschnitte aufweist, wobei an einer Rückseite des oberen ersten Abschnitts seitlich jeweils eine Führungsschiene ausgebildet ist, dass der zweite untere Abschnitt seitlich je einen Rastvorsprung aufweist und dass das Rückenteil der Lagerschale jeweils seitlich an der Verbindungsfläche zwischen der unteren Schiene und dem Rückenteil zu den Rastvorsprüngen passende Rastaussparungen besitzt. In einer besonders bevorzugten Ausführungsform ist die obere Schiene breiter ausgebildet als die untere Schiene und die beiden Schienen greifen mittels der Führungsschienen ineinander. Dadurch wird das Verschieben der beiden Schienen gegeneinander stark vereinfacht und ein Auseinanderfallen der beiden Teile verhindert. Darüber hinaus ermöglicht der Rastvorsprung und die Rastaussparung, dass die obere Schiene mit der unteren Schiene und der Lagerschale einen Formschluss bildet.

Zusammenfassend ermöglicht der erfindungsgemäße Universalhalter verschiedene Faltschlösser unterschiedlicher Breite, Länge und Tiefe bei geringem Materialverbrauch aufnehmen zu können. Somit wird für den Produzenten eine erhebliche Kostenreduzierung im Bereich Logistik, Produktion und Einkauf bewirkt. Durch die Ausführungsform der Lagerschale mit reduzierter Höhe der Stirnfläche und dem in Umfangrichtung um den Basissteg verlaufenden Spanngurt ist eine Entnahme des Faltschlosses nicht nur nach oben, wie bei herkömmlichen Haltern, sondern auch nach vorne möglich, wodurch es zu einer Verbesserung der Bedienerfreundlichkeit kommt. Durch das Zusammenspiel aus Spanngurt, Lagerschale, Festhalteelement und Anti-Rutsch-Einheit werden alle translatorischen und rotatorischen Bewegungsfreiheitsgrade eingeschränkt. Folglich ermöglicht der erfindungsgemäße Universalhalter ein hohes Maß an Flexibilität und Bedienerfreundlichkeit sowohl für den Produzenten als auch für den Endabnehmer.

Im folgenden wird die Erfindung an zwei in der Zeichnung dargestellten Ausführungsbeispielen näher erläutert; es zeigen:
- Fig. 1: eine Vorderansicht der ersten Ausführungsform des erfindungsgemäßen Universalhalters in der Grundposition,
- Fig. 2: eine Darstellung des oberen und des unteren Teils der ersten Ausführungsform des Universalhalters,
- Fig. 3: eine Vorderansicht des unteren Teils der zweiten Ausführungsform des Universalhalters,
- Fig. 4: eine Rückansicht des unteren Teils der zweiten Ausführungsform des Universalhalters,
- Fig. 5: eine Rückenansicht des oberen Teils der zweiten Ausführungsform des Universalhalters,
- Fig. 6: eine Seitenansicht der ersten Ausführungsform des Universalhalters mit geöffnetem Spanngurt.

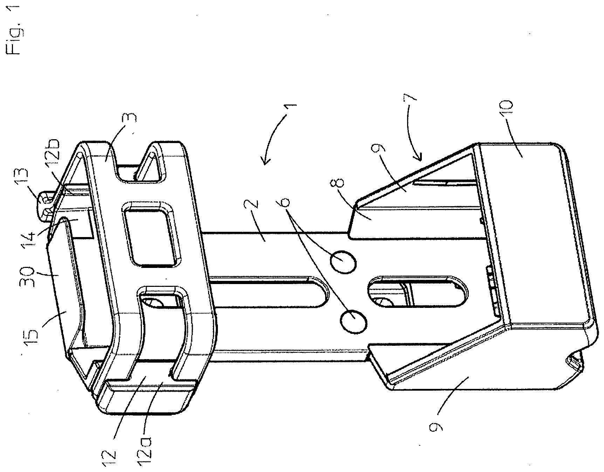

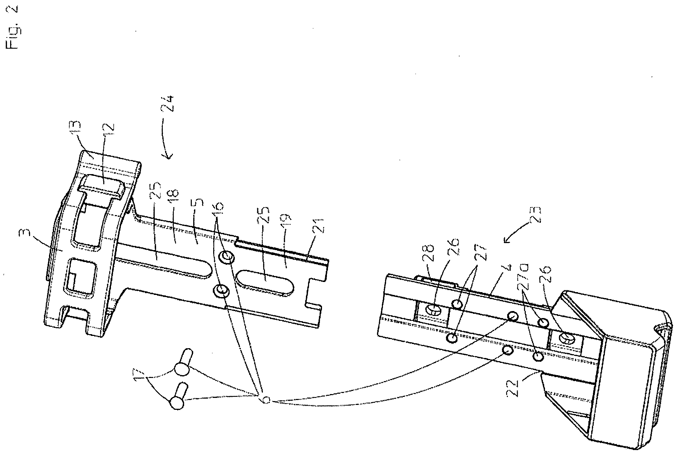

Fig. 2 zeigt den Aufbau der ersten Ausführungsform des erfindungsgemäßen Universalhalters 1 in Form von einem unteren Teil 23 und einem oberen Teil 24. Der obere Teil 24 umfasst eine T-förmig ausgebildete obere Schiene 5, einen in Umfangrichtung um den T-Schenkel 14 der oberen Schiene 5 verlaufenden gitterförmig ausgebildeten Spanngurt 3, zwei an dem T-Schenkel 14 seitlich angeordnete Raststifte 12 und ein Festhalteelement 15 in Form eines Niederhalters 30 am oberen Ende der oberen Schiene 5 (Fig. 1). Das rechte Ende des Spanngurts 3 ist mit dem rechten Raststift 12a fixiert, während das linke Ende des Spanngurts 3 einen Ausleger 13 aufweist und in den linken Raststift 12b eingehakt werden kann zum Öffnen und Schließen des Spanngurts 3. Darüber hinaus weist die obere Schiene 5 in der Mitte zwei entlang einer Längsachse verlaufende unterschiedlich lang ausgebildete Langlöcher 25 und zwei zwischen den beiden Langlöchern 25 parallel zu einander angeordnete Bohrungen 16 auf.

Der untere Teil 23 umfasst eine untere Schiene 4, eine mit der unteren Schiene 4 verbundene Lagerschale 7, zwei mittig entlang der Längsachse verlaufende Öffnungen 26 und drei Bohrungspaare 27, die in unterschiedlichen Abständen zwischen den beiden Öffnungen 26 angeordnet sind und deren Radius mit dem Radius der Bohrungen 16 der oberen Schiene 5 übereinstimmt. Die Lagerschale 7 umfasst ein mit der unteren Schiene 4 verbundenes Rückenteil 8, zwei schräg nach unten verlaufende Seitenteile 9 und eine Stirnseite 10. Die Lagerschale 7 ist breiter ausgebildet als die untere Schiene 4. Die Höhe des Rückenteils 8 ist so gewählt, dass sie beim Zusammensetzen mit der unteren Schiene 4 das erste Bohrungspaar 27a nicht überdeckt. Darüber hinaus ist die Höhe der Stirnseite 10 an den Abstand der Gelenkbolzen des in die Lagerschale 7 einzusetzenden Faltschlosses angepasst. Die obere Schiene 5 des oberen Teils 24 bildet mit der unteren Schiene 4 des unteren Teils 23 den Basissteg 2. Die Bohrungen 16 am oberen Teil 24, die Bohrungspaare 27 des unteren Teils 23 bilden mit dem Fixiermittel 17, in Form von Schrauben oder Niete, die Fixiereinheit 6.

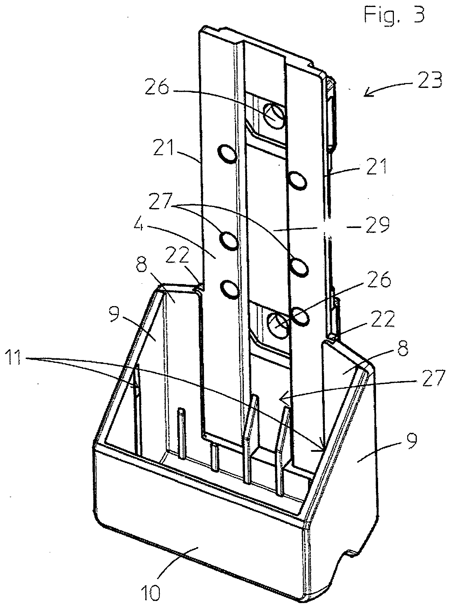

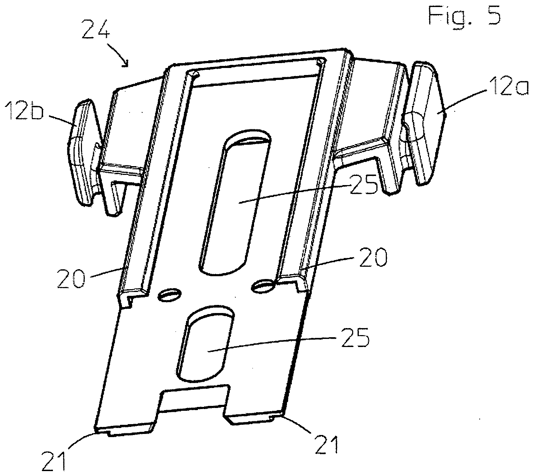

Die obere Schiene 5 ist breiter ausgebildet als die untere Schiene 4 und weist zwei Abschnitte auf: Dabei ist an der Rückseite des ersten oberen Abschnitts 18 seitlich jeweils eine Führungsschiene 20 ausgebildet und der zweite untere Abschnitt 19 weist seitlich je einen Rastvorsprung 21 auf. Die Führungsschienen 20 sind in Fig. 5, einer Darstellung der Rückseite eines zweiten Ausführungsbeispiels des erfindungsgemäßen Universalhalters 1, dargestellt, sind aber auch beim ersten Ausführungsbeispiel vorhanden. Dem Rückenteil 8 der Lagerschale 7 sind jeweils seitlich an der Verbindungsfläche zwischen der unteren Schiene 4 und dem Rückenteil 8 Rastaussparungen 22 zugeordnet, die passend zu den Rastvorsprüngen 21 der oberen Schiene 5 ausgebildet sind (Fig. 3, Fig. 2 und Fig. 4).

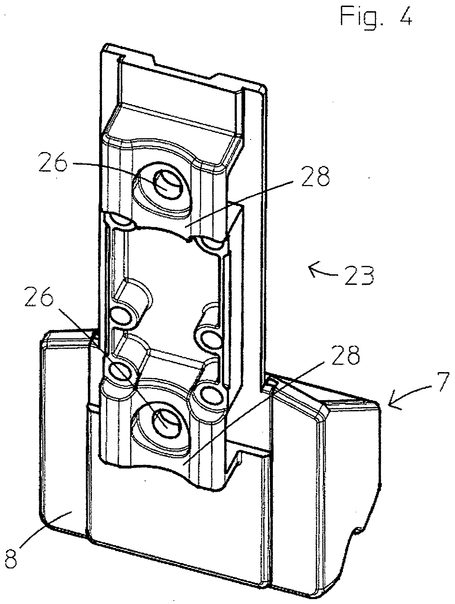

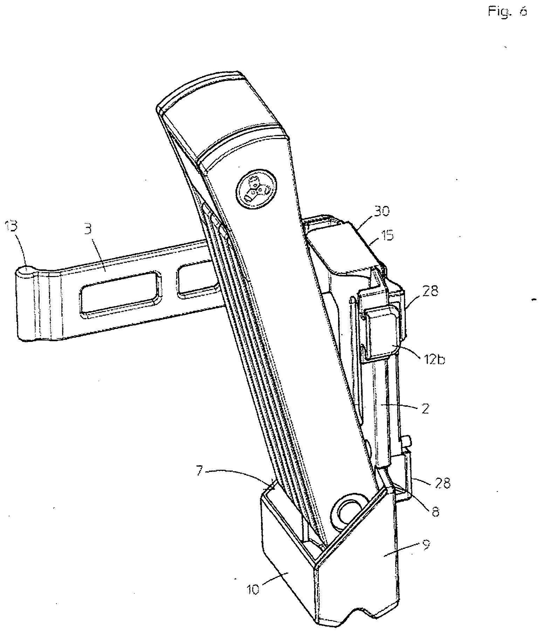

Fig. 4 zeigt die Rückenansicht des unteren Teils 23 der zweiten Ausführungsform des erfindungsgemäßen Universalhalters 1. So befindet sich an der unteren Schiene 4 entlang der Längsachse auf der Höhe der beiden Öffnungen 26 jeweils eine nach innen abgerundete Befestigungsfläche 28, die bei einer Befestigung des Universalhalters 1 an einer Zweiradstrebe einen Formschluss mit derselben bildet zur optimalen Fixierung des Universalhalters 1 an der Zweiradstrebe. Die nach innen abgerundeten Befestigungsflächen sind ebenfalls beim ersten Ausführungsbeispiel des erfindungsgemäßen Universalhalters 1 vorgesehen (Fig. 6).

Das untere Teil 23 des in Fig. 3 dargestellten zweiten Ausführungsbeispiels des erfindungsgemäßen Universalhalters 1 weist im Gegensatz zum ersten Ausführungsbeispiel noch zusätzlich jeweils an der Innenwand der beiden Seitenteile 9 der Lagerschale 7 eine Antirutsch-Einheit 11 in Form von einem Gummistreifen auf. Dieser fixiert noch zusätzlich das Faltschloss in der Lagerschale 7 gegen seitliches Verrutschen und verhindert eine Beschädigung des Faltschlosses bei starken Vibrationen, d.h. z.B. beim Fahren über unebene Bodenbeläge. Darüber hinaus ist die untere Schiene 4 nicht in Form einer einheitlichen Fläche ausgebildet. Die Rastvorsprünge 21 sind im Vergleich zum Mittelteil 29 der unteren Schiene 4 eine Ebene nach vorne versetzt. Dadurch wird in der Mitte der unteren Schiene Material eingespart.

Beim Zusammensetzen des oberen Teils 24 und des unteren Teils 23 des erfindungsgemäßen Universalhalters 1 wird die untere Schiene 4 in die, sich an der Rückseite der oberen Schiene 5 befindlichen, Führungsschienen der oberen Schiene 5 eingeführt. Die Führungsschienen 20 vereinfachen dabei die Verschiebung der unteren Schiene 4 und der oberen Schiene 5 des Basisstegs 2 gegeneinander und verhindern ein Auseinanderfallen der beiden Teile. Zusätzlich greifen die beiden Rastvorsprünge 21 der oberen Schiene 5 in die dazu passenden Rastaussparungen 22 am Rückenteil der Lagerschale 7 ein und vereinfachen ebenso das Verschieben, sowie verhindern das Auseinanderfallen des oberen Teils 24 und des unteren Teils 23. In der in Fig. 1 dargestellten Grundposition des längenverstellbaren Universalhalters 1 bilden Rastaussparung 22 und Rastvorsprung 21 einen Formschluss. In der Grundposition befinden sich beide Bohrungen 16 des oberen Teils 24, passend auf dem ersten Bohrungspaar 27a am unteren Teil 23. Das obere Teil 24 und das untere Teil 23 können dann mittels zweier Fixiermittel 17 in Form von Schrauben oder Niete, die durch die beiden Bohrungen 16 und Bohrungspaare 27, d.h. durch die obere Schiene 5 und die untere Schiene 4, geführt werden, miteinander fixiert werden. Um den Universalhalter 1 auf eine andere Schlosslänge einzustellen, wird das obere Teil 24 des Universalhalters 1 gegen das untere Teil 23 verschoben, bis die Bohrungen 16 des oberen Teils 24 bei der gewünschten Länge auf ein weiteres Bohrungspaar 27 des unteren Teils 23 treffen. Die Position des oberen Teils 24 und des unteren Teils 23 zueinander kann wieder mittels der Fixiereinheit 6 arretiert werden.

Wie in Fig. 2 dargestellt, ist es mit dem erfindungsgemäßen Universalhalter 1 möglich, Faltschlösser mit verschiedenen Längen aufzunehmen. Der untere Teil 23 des Universalhalters 1 weist drei Bohrungspaare 27 auf. Aufgrund der am oberen Teil 24 des Universalhalters 1 ausgebildeten Langlöcher 25 sind die Öffnungen 26, die der Fixierung des Universalhalters 1 an der Zweiradstrebe dienen, auch im Fall der Längenverstellung zugänglich, das bedeutet, dass der Universalhalter 1 auch dann verstellt werden kann, wenn er bereits an der Zweiradstrebe montiert ist. Neben der Längenverstellbarkeit fixiert der Universalhalter 1 das von ihm aufzunehmende Faltschloss in optimaler Hinsicht. Durch die Ausbildung der Lagerschale 7 und durch den in Umfangsrichtung verlaufenden Spanngurt 3 werden die Bewegungsfreiheitsgrade nach vorne, zur Seite, nach hinten und alle Rotationsfreiheitsgrade eingeschränkt. Der Niederhalter 30 fixiert das Faltschloss zusätzlich, indem es das Faltschloss nach unten drückt und damit den Bewegungsfreiheitsgrad nach unten zusätzlich einschränkt. Aufgrund der geringen Höhe der Stirnseite 10 der Lagerschale 7 kann beim Öffnen des Spanngurts 3 das Faltschloss nicht nur nach oben, sondern auch nach vorne hin entnommen werden (Fig. 6). Dies erweist sich besonders bei Zweirädern, deren Rahmenkonfiguration nur einen geringen Montageraum zur Verfügung stellen, als äußerst vorteilhaft.

### Bezugszeichenliste

- 1: Universalhalter
- 2: Basissteg
- 3: Spanngurt
- 4: untere Schiene
- 5: obere Schiene
- 6: Fixiereinheit
- 7: Lagerschale
- 8: Rückenteil
- 9: Seitenteile
- 10: Stirnseite
- 11: Antirutsch-Einheit
- 12: Raststifte
- 12a: rechter Raststift
- 12b: linker Raststift
- 13: Ausleger
- 14: T-Schenkel
- 15: Festhalteelement
- 16: Bohrung
- 17: Fixiermittel
- 18: erster oberer Abschnitt
- 19: zweiter unterer Abschnitt
- 20: Führungsschiene
- 21: Rastvorsprung
- 22: Rastaussparung
- 23: unteres Teil
- 24: oberes Teil
- 25: Langlöcher
- 26: Öffnungen
- 27: Bohrungspaare
- 27a: erstes Bohrungspaar
- 28: Befestigungsfläche
- 29: Mittelteil
- 30: Niederhalter

## Patentansprüche

1. Universalhalter(1) für ein Faltschloss, mit einem, mindestens ein Mittel zur Befestigung an einer Zweiradstrebe aufweisenden, Basissteg (2) und mit einem Spanngurt (3), **dadurch gekennzeichnet, dass** der Basissteg (2) in Form von einer unteren Schiene (4) und einer oberen Schiene (5)ausgebildet ist, die gegeneinander verschiebbar und mittels einer Fixiereinheit (6) arretierbar sind, dass der Spanngurt (3) in Umfangrichtung zum Basissteg (2) verläuft und mit der oberen Schiene (5) an zwei Seiten verbindbar ist, und dass am unteren Ende der unteren Schiene (4) eine Lagerschale (7) angeordnet ist.

2. Universalhalter nach Anspruch 1, **dadurch gekennzeichnet, dass** die Lagerschale (7) ein mit der unteren Schiene (4) zusammenwirkendes Rückenteil (8), zwei Seitenteile (9) und eine Stirnseite (10) aufweist, dass die Höhe des Rückenteils (8) geringer ist als die Länge der unteren Schiene (4) und dass die Höhe der Stirnseite (10) geringer ist als die Höhe des Rückenteils (8).

3. Universalhalter nach Anspruch 2, **dadurch gekennzeichnet, dass** die Höhe der Seitenteile (9) sich vom Rückenteil (8) zur Stirnseite (10) schräg verlaufend verringert.

4. Universalhalter nach einem der Ansprüche 2 bis 3, **dadurch gekennzeichnet, dass** dem Inneren der Lagerschale (7) an den beiden Seitenteilen (9) je eine Antirutsch-Einheit (11) zugeordnet ist.

5. Universalhalter nach einem der Ansprüche 1 bis 4, **dadurch gekennzeichnet, dass** die obere Schiene (5) T-förmig ausgebildet ist,dass der Spanngurt (3) einen mit zwei Raststiften (12) verbundenen Ausleger (13) aufweist, und dass die Raststifte (12) an den freien Enden des oberen T-Schenkels (14) der oberen Schiene (5) angeordnet sind

6. Universalhalter nach einem der Ansprüche 1 bis 5, **dadurch gekennzeichnet, dass** die obere Schiene (5) ein Festhalteelement (15) aufweist.

7. Universalhalter nach einem der Ansprüche 1 bis 6, **dadurch gekennzeichnet, dass** die Fixiereinheit (6) mindestens eine Bohrung (16) durch mindestens die obere Schiene (5) und ein Fixiermittel (17) umfasst.

8. Universalhalter nach einem der Ansprüche 1 bis 7, **dadurch gekennzeichnet, dass** der Spanngurt (3) gitterförmig ausgebildet ist.

9. Universalhalter nach einem der Ansprüche 1 bis 8 **dadurch gekennzeichnet, dass** die obere Schiene (5) und die untere Schiene (4) unterschiedlich breit vorgesehen sind, dass die obere Schiene (5) zwei Abschnitte aufweist, wobei an einer Rückseite desoberen ersten Abschnitts (18) seitlich jeweils eine Führungsschiene (20) ausgebildet ist, dass der zweite untere Abschnitt (19) seitlich je einen Rastvorsprung (21) aufweist und dass das Rückenteil (8) der Lagerschale (7) jeweils seitlich an der Verbindungsfläche zwischen der unteren Schiene (4) und dem Rückenteil (8) zu den Rastvorsprüngen (21) passende Rastaussparungen(22) besitzt.

## Claims

1. A universal holder (1) for a folding lock, comprising base bar having at least one means for fastening to a bicycle strut, and a retaining strap (3), **characterized in that** the base bar (2) is formed by a lower rail (4) and an upper rail (5) that can be displaced relative to each other and can be locked relative to each other by a fixation unit (6), that the retaining strap (3) extends in the circumferential direction to the base bar (2) and is connectable to the upper rail (5) on two sides, and that a support cup (7) is provided on a lower end of the lower rail (4).

2. The universal holder according to claim 1, **characterized in that** the support cup (7) comprises a back member (8) cooperating with the lower rail (4), two side members (9) and one front side (10), that the height of the back member (8) is less than the length of the lower rail (4), and that the height of the front side (10) is less than the height of the back member (8).

3. The universal holder according to claim 2, **characterized in that** the height of the side members (9) decreases from the back member (8) to the front side (10).

4. The universal holder according to any of claims 1 to 3, **characterized in that** an antislip unit (11) is provided inside the support cup (7) on each of the two side members (9).

5. The universal holder according to any of claims 1 to 4, **characterized in that** the upper rail (5) is T-shaped, that the retaining strap (3) has a boom (13) which is connected to two pin heads (12), and that the pin heads (12) are arranged on the free ends of the upper T-arm (14) of the upper rail (5).

6. The universal holder according to any of claims 1 to 5, **characterized in that** the upper rail (5) comprises a securing member (15).

7. The universal holder according to any of claims 1 to 6, **characterized in that** the fixation unit (6) has at least one bore (16) through at least the upper rail (5) and one fastener (17).

8. The universal holder defined in any one of claims 1 to 7, **characterized in that** the retaining strap (3) is formed grid like.

9. The universal holder according to any of claims 1 to 8, **characterized in that** the upper rail (5) and the lower rail (4) are of different widths, that the upper rail (5) has two sections, wherein a respective guide rib (20) is formed on a back side and on each side of the upper first section (18), wherein the second lower section (19) on each side has respective retaining protrusions (21), and that the back member (8) of the support cup (7) on each side has a retaining recess (22) fitting with the retaining protrusions (21) at the connecting surface between the lower rail (4) and the back member (8).

## Revendications

1. Support de fixation universel (1) pour un cadenas pliant, comportant une branche de base (2) présentant au moins un moyen de fixation à un tube de bicyclette et comportant une courroie de serrage (3), **caractérisé en ce que** la branche de base (2) est réalisée sous la forme d'un rail inférieur (4) et d'un rail supérieur (5) qui peuvent coulisser l'un par rapport à l'autre et peuvent être arrêtés au moyen d'une unité de blocage (6), **en ce que** la courroie de serrage (3) s'étend dans une direction circonférentielle par rapport à la branche de base (2) et peut être reliée au rail supérieur (5) de deux côtés, et **en ce qu'**une coque de support (7) est disposée à l'extrémité inférieure du rail inférieur (4).

2. Support de fixation universel selon la revendication 1, **caractérisé en ce que** la coque de support (7) présente une partie arrière (8) qui coopère avec le rail inférieur (4), deux parties latérales (9) et une face frontale (10), **en ce que** la hauteur de la partie arrière (8) est inférieure à la longueur du rail inférieur (4) et **en ce que** la hauteur de la face frontale (10) est inférieure à la hauteur de la partie arrière (8).

3. Support de fixation universel selon la revendication 2, **caractérisé en ce que** la hauteur des parties latérales (9) décroît obliquement de la partie arrière (8) vers la face frontale (10).

4. Support de fixation universel selon l'une des revendications 2 à 3, **caractérisé en ce qu'**une unité antidérapante (11) est associée à l'intérieur de la coque de support (7) sur chacune des deux parties latérales (9).

5. Support de fixation universel selon l'une des revendications 1 à 4, **caractérisé en ce que** le rail supérieur (5) est réalisé en forme de T, **en ce que** la courroie de serrage (3) présente une partie en porte-à-faux (13) reliée à deux taquets d'arrêt (12), et **en ce que** les taquets d'arrêt (12) sont disposés aux extrémités libres de la branche en T supérieure (14) du rail supérieur (5).

6. Support de fixation universel selon l'une des revendications 1 à 5, **caractérisé en ce que** le rail supérieur (5) présente un élément de maintien (15).

7. Support de fixation universel selon l'une des revendications 1 à 6, **caractérisé en ce que** l'unité de blocage (6) comprend au moins un perçage (16) à travers au moins le rail supérieur (5) et un moyen de blocage (17).

8. Support de fixation universel selon l'une des revendications 1 à 7, **caractérisé en ce que** la courroie de serrage (3) est réalisée en forme de grille.

9. Support de fixation universel selon l'une des revendications 1 à 8 **caractérisé en ce que** le rail supérieur (5) et le rail inférieur (4) sont prévus de largeurs différentes, **en ce que** le rail supérieur (5) présente deux portions, un rail de guidage (20) étant formé de chaque côté sur une face arrière de la première portion supérieure (18), **en ce que** la deuxième portion inférieure (19) présente de chaque côté une saillie d'arrêt (21), et **en ce que** la partie arrière (8) de la coque de support (7) possède de chaque côté, sur la surface de liaison entre le rail inférieur (4) et la partie arrière (8), des évidements d'arrêt (22) adaptés aux saillie d'arrêt (21).
